# EUROPEAN PATENT APPLICATION

(11) **EP 0 972 627 A2**
(43) Date of publication of application: **19.01.2000**
(21) Application number: 99105667.2
(22) Date of filing: 19.03.1999
(51) Int. Cl.: B29C 51/42, B29C 71/02

(54) **Thermoforming system for plastic containers**

(30) Priority: 16.07.1998 JP 21972198; 08.12.1998 JP 36378198
(71) Applicant: Shinwa Kikai Co., Ltd., Satte-shi, Saitama-ken (JP); IDEMITSU PETROCHEMICAL CO., LTD., Tokyo 108-0014 (JP)
(72) Inventor: Kageyama, Genzaburo, Kitakatsushika-gun, Saitama-ken (JP); Odaka, Hiroshi, Himeji-shi, Hyogo-ken (JP)
(74) Representative: Sajda, Wolf E., Dipl.-Phys.

(57) **Abstract**

Disclosed is an apparatus for thermoforming a thermoplastic blank (10) into a plastic container (1) having a cup-shaped main body (2) with a radially extending flange (3). A blank holder (12) is conveyed by a conveyor (15) along a predetermined path of travel in a predetermined direction. During one circulation, a plurality of blanks are supplied by a blank feeder (16) to the blank holder, a central portion (10a) of each blank is heated by direct contact with upper and lower heating boards (19a, 19b) of heating unit (18) to preferably above a melting point of the blank material, then the heated portion is formed into the cup-shaped main body by a forming unit (20), then a peripheral portion (10b) is annealed by a flange annealing unit (26), and finally the product containers are removed from the blank holder by a pick-up unit (28). The vacant blank holder (12'') is returned to the blank feed station. An annular ridge (3a) or skirt flange (3b) may be formed, preferably at the flange annealing station. A half-notch may be formed from the top surface of the peripheral portion of the blank to a predetermined depth to improve peel-off property of a plastic film lid which is heat-sealed to the flange of the product container. located at a third predetermined location forward of the second predetermined location in the direction of travel of the blank holder along the path of travel thereof, for forming the heated central area of the blank into a predetermined cup shape of the main body of the container.

## Description

### BACKGROUND OF THE INVENTION

### Field of the Invention

The present invention relates in general to a plastic container thermoforming system, and more particularly to process and apparatus for thermoforming flanged cup-shape container from blank sheet of thermoplastic material such as polypropylene, polyethylene, polyethylene-terephthalate and polyvinyl chloride.

### Description of the Prior Art

Various attempts have been proposed to form cup-shaped containers from plastic blanks. For example, Japanese patent publication No. 47-4588 discloses a process, which is often referred to by "scrapless forming process (SFP)", in which a plastic disc is cast from a square cut sheet and then thermoformed into a container under pressure. This process, however, involves some disadvantages. The casting process should leave some distortion in the plastic disc. Especially when the plastic sheet has a layered construction composed of different materials, it has been extremely difficult to maintain the original layered construction in the cast disc. This prior art requires a large-sized cast machine, which lowers productivity and increases manufacturing costs of plastic containers.

Japanese patent publication No. 48-11817 teaches that a container of a uniform thickness is formed from a plastic blank of a predetermined unique configuration in a relatively low temperature condition. This technique, however, has disadvantages similar to the above-described prior art. Blank formation is difficult in practice. It is not suitable for a plastic sheet of a layered construction.

Japanese un-examined patent publication No. 47-8089 teaches a heating process in which a travelling plastic blank is in continuous contact with opposite heating plates. More particularly, the plastic blank is heated during travel in sliding movement relative to a pair of parallel heating plates. This process requires definite control of temperature of the heating plates. Failure of temperature control results in fatal deformation of the blank.

In Japanese patent publication No. 6-88328 and Japanese un-examined patent publication No. 2-150338, a heating process is carried out in such a manner that only a central portion of a plastic blank is heated to above a melting point of plastic material of the blank, whereas its peripheral portion is maintained to be in a solid phase, thereby manufacturing a retortable container. The plastic blank is held in an oven of a temperature higher than the melting point of the blank material, so that it is necessary to provide means for preventing the peripheral portion of the blank from being heated to above the melting point. Still, the peripheral portion of the blank tends to expand or swell due to thermal conduction from the central portion which has been subjected to heating to a melting phase in the oven. Such tendency may be prohibited by cooling means that cools the blank after heating, which of course increases the overall manufacturing costs.

### SUMMARY OF THE INVENTION

Accordingly, it is a principal object of the present invention to obviate the above-described disadvantages of the prior art techniques.

Another object of the present invention is to provide novel thermoforming system capable of manufacturing a container from a plastic blank in small-sized equipment, at reduced costs, with improved productivity.

Still another object of the present invention is to provide a thermoforming technique that is particularly suitable to manufacturing of a plastic container having a cup-shaped body with a radially extending flange.

Yet another object of the present invention is to produce a plastic container with a flange that is not deformed due to stress or strain remaining therein after a blank is formed into the container

Yet another object of the present invention is to produce a plastic container with a flange on which a plastic sheet cover can be well heat-sealed to form an air-tight chamber in the sealed container, with easier peel-off property of the sheet cover.

In accordance with an aspect of the present invention, there is provided a thermoforming process for manufacturing a plastic container having a cup-shaped main body with a radially extending flange from an upper edge thereof comprising the steps of preparing a thermoplastic blank of a predetermined configuration; subjecting a central portion of the blank to direct contact with a pair of opposed heating boards so that the central portion is heated to a predetermined temperature, a peripheral portion of the blank being kept uncontact with the heating boards; and forming the heated central portion of the blank into a predetermined cup shape of the main body of the container.

In accordance with another aspect of the present invention, there is provided a thermoforming process for manufacturing a plastic container having a cup-shaped main body with a radially extending flange from an upper edge thereof, comprising the steps of preparing a thermoplastic blank of a predetermined configuration; heating a central portion of the blank to a predetermined temperature; forming the heated central portion of the blank into a predetermined cup shape of the main body of the container; and heating the flange of the container to remove a forming stress remaining in the flange. In a preferred embodiment, the flange is heated to a temperature above a melting point of the blank material. The flange heating step may be followed by cooling.

In accordance with another aspect of the present invention, there is provided an apparatus for thermoforming a thermoplastic blank into a plastic container having a cup-shaped main body with a radially extending flange from an upper edge thereof, comprising a blank holder for supporting the blank; a conveyor that conveys the blank holder along a predetermined path of travel in a predetermined direction; a blank feeder that feeds the blank to the blank holder at a first predetermined location along the path of travel of the blank holder; a heating unit, located at a second predetermined location forward of the first predetermined location in the direction of travel of the blank holder along the path of travel thereof, having at least one pair of opposed heating boards for direct contact with opposite surfaces of the blank at a central portion thereof, and a forming unit, located at a third predetermined location forward of the second predetermined location in the direction of travel of the blank holder along the path of travel thereof, for forming the heated central area of the blank into a predetermined cup shape of the main body of the container.

In a preferred embodiment of the thermoforming apparatus, the blank holder comprises a base plate with a plurality of openings, a plurality of rings each fitted within the opening and provided with an inside platform on which a peripheral portion of the blank is supported, pusher members radially movable with respect to the ring, and spring means that forces the pusher members to protrude toward the inside platform for engagement with a peripheral edge of the blank supported thereon.

In another preferred embodiment, the apparatus further comprises first positioning means for positioning the blank holder to a first predetermined position with respect to the heating unit and second positioning means for positioning the blank holder to a second predetermined position with respect to the forming unit. The first positioning means may comprise a first cylinder secured to the blank holder and a first centering plug secured to the heating unit for engagement within the first cylinder when the blank holder is in the second predetermined location. Likewise, the second positioning means may comprise a second cylinder secured to the blank holder and a second centering plug secured to the forming unit for engagement within the second cylinder when the blank holder is in the third predetermined location.

In still another preferred embodiment of the apparatus, the conveyor is driven to make brief stops for predetermined period at the first, second and third predetermined locations, respectively.

In still another preferred embodiment of the apparatus, the heating unit comprises a pair of the heating boards at opposite sides of the path of travel of the blank holder, and drive means for moving the heating boards toward one another to press therebetween the central area of the blank supported by the blank holder staying at the second predetermined location.

In still another preferred embodiment of the apparatus, one of the heating boards in the heating unit contacts only with the central portion of the blank at one surface thereof whereas the other heating board is somewhat larger to allow contact with the central portion and its surrounding portion of the blank at the other surface.

At least one of the heating boards may be provided with one or more of holes through which air is injected onto the blank surface to facilitate the blank to separate from the heating board. A plurality of the heating units may be installed along the path of travel of the blank holder at predetermined intervals, whereby the blank is heated to successively increased temperatures during travel through the heating units.

In still another preferred embodiment of the apparatus, the forming unit comprises a cast mold movably mounted at one side of the path of travel of the blank holder, a substantially cylindrical clamp movably mounted at the opposite side of the path of travel of the blank holder, drive means for moving the cast mold and the clamp toward one another to define an air-tight chamber therebetween, and press means for forcing the blank in the air-tight chamber to be in contact under pressure with an inner wall of the cast mold. The press means may comprise a plug mounted reciprocatably in the clamp. The press means may comprise air injecting means for injecting pressurized air into the air-tight chamber toward the blank and/or vacuum means for creating a vacuum or pressure-reduced condition in the air-tight chamber. The forming unit may further include a packing member mounted on a bottom of the clamp to be elastically engageable with an upper surface of the blank holder when the air-tight chamber is defined between the cast mold and the clamp. The forming unit may further include undulating means for forming the peripheral portion of the blank into an undulating flange with an upward projection.

The apparatus of the present invention may further comprise notch forming means for forming an annular notch of a predetermined depth from the top surface of the blank at a boundary area between the central portion to be formed into the cup-shaped main body of the container and the peripheral area to be formed as the flange. The notch forming means may be mounted between the blank feeder and the heating unit, or between the heating unit and the forming unit, or at a location forward of the forming unit along the path of travel of the blank holder. The notch forming means may comprise an annular knife surrounding the upper heating board in the heating unit and movable in synchronism with the upper heating board. The annular knife may be secured to or formed integral with the upper heating board. In an alternative embodiment, an annular knife is secured to or formed integral with the bottom of the clamp in the forming unit. Preferably, temperature control means is provided to control temperature of the annular knife.

The apparatus may further comprises a second heating unit, located at a fourth predetermined location forward of the third predetermined location in the direction of travel of the blank holder along the path of travel thereof, for heating the flange portion of the formed container to remove a forming stress remaining in the flange portion. A cooling unit for cooling the heated flange portion may further be located forward of the fourth predetermined location. The apparatus may further comprise undulating means for forming the peripheral portion of the blank into an undulating flange with an upward projection, which may be mounted in the second heating unit or separately located in the forward of the heating unit.

In accordance with the present invention, plastic material to be used as the blank is not limitative as far as it is thermoplastic or thermoformable. For example, thermoplastic resin including polypropylene (PP), polyethylene (PET), polystyrene (PS), polyamide (PA), polyester (PE), any combination thereof, and thermoplastic elastomer has been found as suitable material. Additives or inorganic fillers may be incorporated in 5-70% by weight to the material. Also preferable is resin having improved gas-barrier property, such as ethylene-vinyl alcohol copolymer (EVA), polyvinyl chloride (PVC) and polyvinylidene chloride (PVDC), to which inorganic filler in 10-80% by weight may be incorporated. The present invention is applicable not only to a single-layer plastic sheet but also to a plastic sheet composed of a plurality of different material layers.

### BRIEF DESCRIPTION OF THE DRAWINGS

Other objects and advantages of the present invention can be better understood from the following description when read in conjunction with the accompanying drawings in which:
Fig. 1 is a schematic representation of a thermoforming apparatus embodying the present invention;
Fig. 2 is an oblique view showing an example of a blank holder to be used in the apparatus of Fig. 1;
Fig. 3 is a cross-section of the blank holder of Fig. 2;
Fig. 4 is a cross-section of the blank holder to which a blank has been supplied by a blank feeder;
Fig. 5 is an oblique view showing an example of a plastic container to be produced by the apparatus;
Fig. 6 is a cross-sectional representation showing a heating unit in the apparatus, in which upper and lower heating boards in operation are indicated by solid lines whereas those in retracted positions are indicated by imaginary lines;
Fig. 7 is a cross-sectional representation showing a forming unit in the apparatus, in which an upper clamp and a lower cast mold are separated from each other;
Fig. 8 is a cross-sectional representation showing the forming unit of Fig. 7 in which the clamp and the cast mold cooperate with each other to define an air-tight chamber therebetween to thereby form the blank into the container shape;
Fig. 9 is a cross-sectional representation showing a flange annealing unit including heater unit for heating the flange portion of the formed container to a predetermined temperature to obviate or relieve a stress or strain remaining in the flange portion and cooler unit for cooling the heated flange portion;
Fig. 10 is a partial cross-sectional representation showing an example of positioning means for positioning the blank holder at predetermined definite location with respect to the heating unit and the forming unit during operation;
Fig. 11 is a schematic front view) partly in cross-section, of a preferable embodiment of the blank holder;
Fig. 12 is a cross-sectional representation showing another embodiment of the forming unit with undulating means for forming an undulating flange at the same time of forming a cup-shaped main body of the container;
Fig. 13 is a partial cross-section of another embodiment of the forming unit with undulating means;
Fig. 14 is a partial cross-section of still another embodiment of the forming unit with undulating means;
Fig. 15 is a partial cross-section showing an embodiment of undulating means that is mounted to the flange annealing unit;
Fig. 16 is a partial cross-section showing another embodiment of undulating means mounted to the flange annealing unit;
Fig. 17 is a front view showing another embodiment of the heating unit in which an upper set of the heating boards are separated from a lower set of the heating boards;
Fig. 18 is a partial cross-section on an enlarged scale of the heating unit of Fig. 14 in which the blank on the blank holder is heated by the upper and lower heating boards;
Fig. 19 is a cross-sectional representation of an embodiment of notch forming means;
Fig. 20 is a cross-sectional representation of another embodiment of the notch forming means which is formed integral with the bottom of the clamp in the forming unit; and
Fig. 21 is a cross-sectional representation of still another embodiment of the notch forming means which surrounds the upper heating boards in the heating unit.

### DETAILED DESCRIPTION OF THE PREFERRED EMBODIMENTS

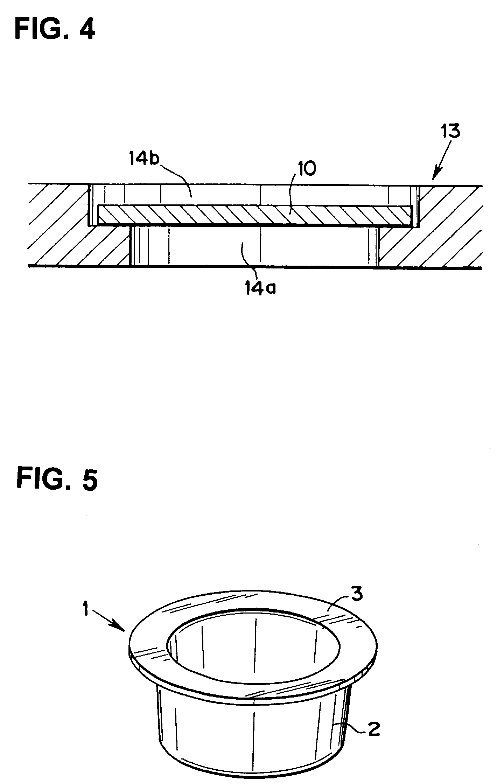

A thermoforming apparatus embodying the present invention will be described hereinbelow in reference to the accompanying drawings. The apparatus is used to produce a food container 1 of a cup-shaped main body 2 with a radially and laterally extending flange 3, an example of which is shown in Fig. 5, from a blank disk of thermoplastic material such as polypropylene (PP). The blank disk is cut out from a large-sized or continuous plastic sheet to have a diameter substantially equivalent to that of the final product 1.

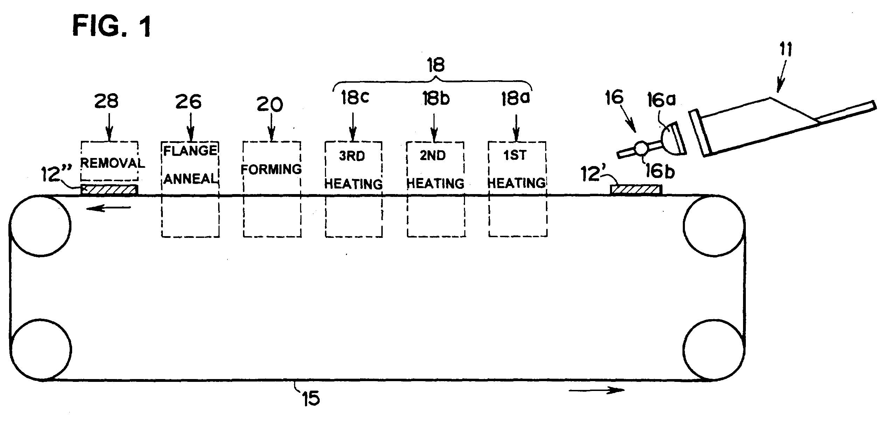

Referring now to Fig. 1, a plurality of the blank disks may be stored in a chute 11. In the illustrated embodiment, a blank holder 12 has four blank supports 13 in each of front and rear rows separated at a predetermined interval in the direction of travel. Accordingly, there are four chutes 11 arranged side by side in a direction perpendicular to the travel path of blank holder 12.

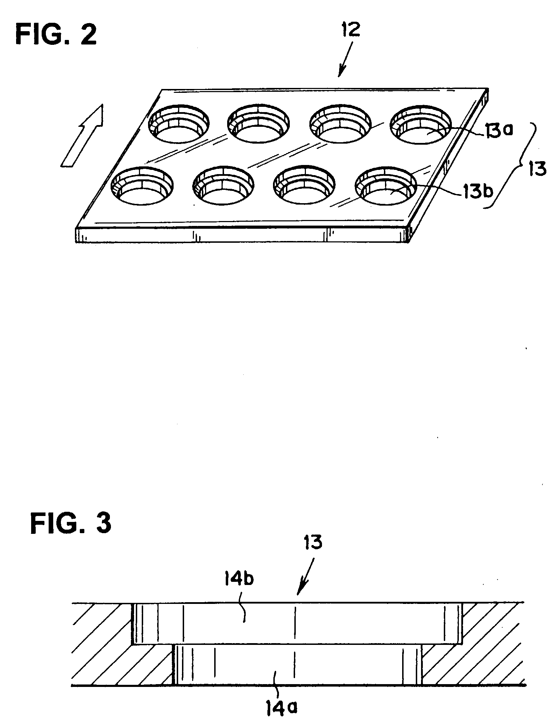

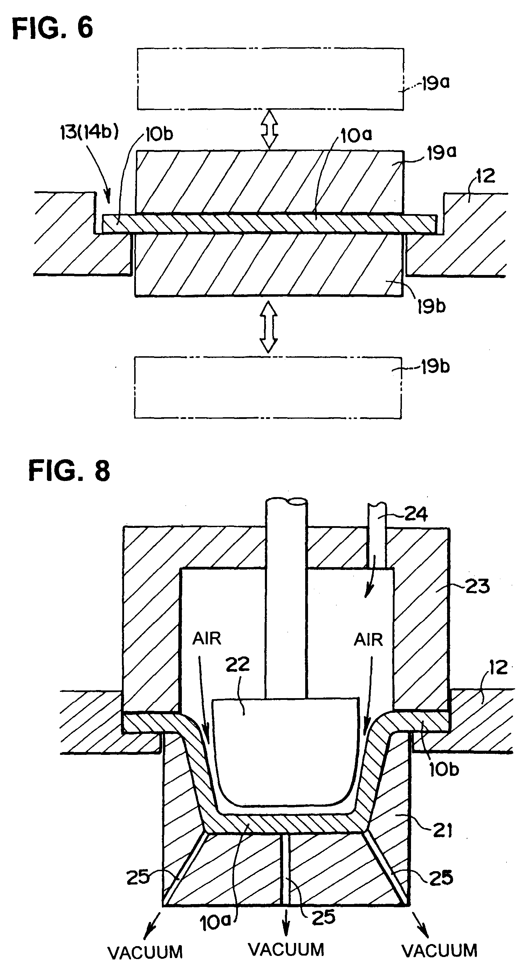

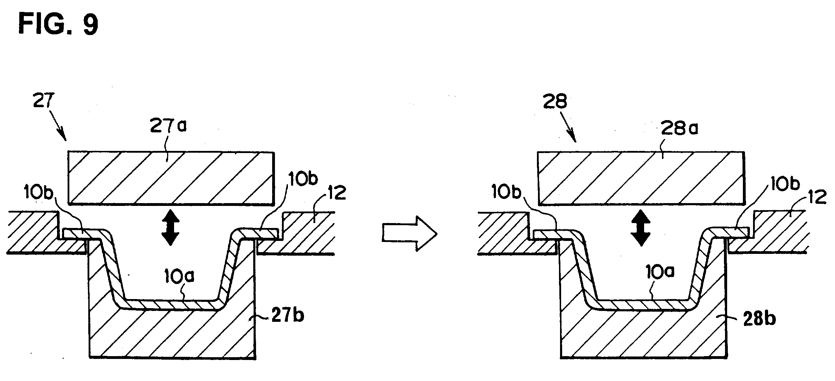

Blank holder 12 is a base plate of steel, stainless or any other suitable metal, having four forward blank supports 13a and four rearward blank supports 13b, as shown in Fig. 2. Each blank support 13 is a through hole consisting of a lower section 14a and an upper section 14b of a diameter larger than that of lower section 14a, as best seen in Fig. 3. Lower section 14a has a diameter that allows entry of a lower heating boards 19b (Fig. 6) and a mold 21 (Fig. 8). The diameter difference between upper and lower sections 14a, 14b provides an annular platform on the bottom of upper section 14a for supporting thereon a peripheral portion of a blank 10 (Fig. 4).

A plurality of blank holders 12 are connected to an endless chain conveyor 15 which is driven by a drive control mechanism (not shown) to circulate in a counter-clockwise direction in Fig. 1. Blank holders 12 run in a train along a predetermined path of travel that is determined by conveyor 15. It is to be appreciated that, though only two blank holders 12' and 12'' are shown in Fig. 1, the former being located at a feed station and the latter at a pick-up station, there are many blank holders between 12' and 12'' and also between 12'' and 12'. Blank holders located between 12' and 12'' support thereon eight blanks 10 (Fig. 2), whereas no blank 10 is mounted on blank holders between 12'' and 12'.

The drive control mechanism controls conveyor 15 to make a stop-and-go journey. In the illustrated embodiment of Fig. 1, conveyor 15 makes brief stops for predetermined period at a feed station where blanks 10 are supplied to blank holder 12', at least one heating station where blanks 10 on blank holder 12 are heated by a heating unit 18, a forming station where the heated blanks 10 on blank holder 12 are formed into cup-shaped containers by a forming unit 20, a cooling station where the containers on blank holder 12 are cooled by a cooling unit 26 and a pick-up station where the containers are removed from blank holder 12'' by pick-up unit 28.

More particularly, when the blank holder from which the containers have been removed at the pick-up station reaches the feed station, the said blank holder 12' stays standstill for a predetermined period, during which eight blanks 10 are supplied to blank supports 13 from chute 11. In this embodiment, by way of example, a transfer device 16 is used to transport a lowermost blank 10 in chute 11 to a corresponding one of blank supports 13 in blank holder 12'. Transfer device 16 has a shaft pivottable on a pivot 16a, which is provided at a leading end thereof with a vacuum cup 16a capable of absorbing blank 10. At a position shown in Fig. 1, the shaft extends so that the lowermost blank 10 in chute 11 is absorbed onto cup 16a by vacuum suction. Then, the shaft is rotated clockwise to direct cup 16a upside down and the vacuum in cup 16a is released to drop blank 10 onto one of rearward blank supports 13b in blank holder 12'. Such blank feeding operation is repeated with respect to forward blank supports 13a.

Blank 10 is supported within upper section 14b of blank support 13 in a suspended fashion (Fig. 4). Since blank 10 tends to expand during heating, blank 10 has a diameter slightly smaller than the bore of upper section 14b. This design will enable the peripheral edge of blank 10 to tightly engage with the inner wall of upper section 14b when blank 10 is subjected to heating.

Blank holder 12 supporting blanks 10 within respective blank supports 13 is then transferred to the heating station where each blank 10 is heated by heating unit 18 to a temperature at which it is thermoformable into the cup-shape. Preferably, there is provided plural heating stations along the path of travel of blank holder 12. In the illustrated embodiment, there are three heating stations at predetermined intervals, where blank 10 is heated first by heating unit 18a of approximately 120 °C, then by heating unit 18b of approximately 140 °C and finally by heating unit 18c of approximately 160 °C, for example. Such phase-up heating control will prevent strain or deformation of plastic blank 10.

Blank 10 should be heated to a temperature which depends on the blank material and the kind of foods to be contained in container 1. When a container for jelly is manufactured from a blank 10 of polypropylene having a melting point of approximately 165 °C, the blank temperature may be 160 °C as in the above-described embodiment, that is lower than the melting point of the blank material. However, when container 1 to be manufactured from blank 10 is used as a package of cooked rice, which should be subjected to sterilization at a temperature of 130 °C or above after the package is sealed, the final heating unit (18c) preferably has a temperature higher than the melting point of the blank material. If blank 10 is heated to below the melting point, some degree of stress and strain remains in blank 10, which results in deformation of the package during high-temperature sterilization.

Each heating unit 18 (18a-18c) has a pair of opposite heating boards 19a, 19b of controlled temperature and a drive mechanism (not shown) for elevating boards 19a, 19b in opposite directions. When blank holder 12 is advanced to the first heating station by circulation of conveyor 15, it makes a brief stop at this position for a predetermined period, during which boards 19a, 19b are moved by the drive mechanism toward one another from their retracted positions indicated by imaginary lines in Fig. 6 to their operative positions indicated by solid lines. Thus, blank 10 supported by blank support 13 of blank holder 12 is in press contact with upper and lower boards 19a, 19b to approach to the board temperature. After the heating process by first heating unit 18a is completed, conveyor 15 again starts running so that blank holder 12 is moved from the first heating station to the second heating station where similar heating process is carried out by second heating unit 18b. Likewise, the heating process is carried out by third heating unit 18c. Heating units 18a-18c have the same arrangement but differ in the board temperature.

As having been described hereinabove, the peripheral portion 10b of blank 10 which corresponds to flange 3 of container 1 is supported by flange support 13, more particularly within upper section 14b thereof, of blank holder 12. Accordingly, at the heating station, only the central portion 10a to be formed into a cup-like configuration is heated by direct contact from opposite surfaces thereof with heating boards 19a, 19b of heating units 18a-18c. The blank temperature after heating for a sufficient period will depend on the board temperature. When the final board temperature is assigned a temperature below the melting point of the blank material (for example, the final board temperature is 160 °C for polypropylene blank), not only the peripheral portion 10b but also the central portion 10a of blank 10 do not reach the melting point, which means that the entirety of blank 10 remains in a solid phase of the blank material. On the contrary, when the container to be produced is a package of cooked rice which should be subjected to high temperature sterilization, the final board temperature should be higher than the melting point of the blank material so that at least the central portion 10a is heated to a temperature above the melting point and thus converted in a melt phase of the blank material. In this case, the peripheral portion 10b may remain in the solid phase or also be converted in the melt phase by thermal conduction from the central portion 10a.

Although the peripheral portion 10b may be kept in the solid phase of the blank material, it is practically preferable that its temperature is increased to a sufficient level to minimize stress and strain remaining in that portion, which will prevent deformation and undulation appearing in flange 3 of the formed container 1. To achieve this, in a preferable design of heating unit 18, lower heating board 19b has a diameter substantially equal to that of the central portion 10a of blank 10 to be formed into a cup, whereas upper heating board 19a has a somewhat larger diameter, as shown in Fig. 6, for direct contact with an upper surface area wider than the central area 19a. Upper heating board 19a may be designed such that its diameter is substantially equal to that of blank 10.

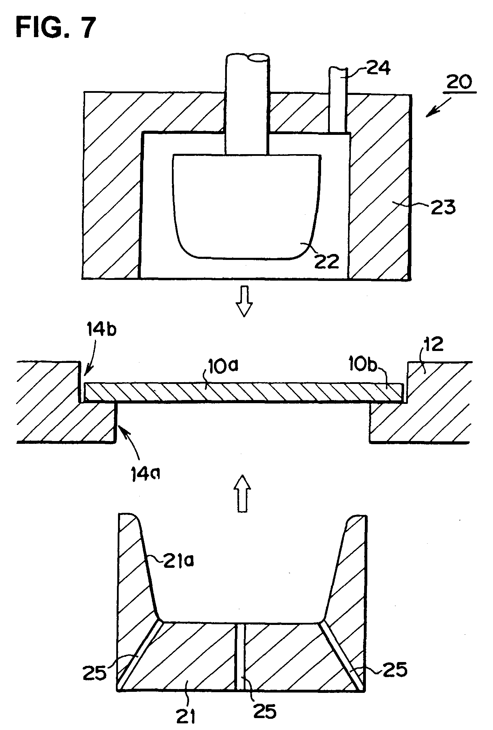

Referring again to Fig. 1, blank holder 12 is moved from the heating station to the forming station where it stops for a predetermined period during which the thermally melted or softened central area 10a of blank 10 supported thereon is formed into a cup-like shape of container main body 2 by forming unit 20. Figs. 7 and 8 show an embodiment of forming unit 20 which comprises a mold 21 including an inner wall 21a defining the outline of main body 2, a plug 22 cooperating with inner wall 21a of mold 21 to form the blank central portion 10a into the configuration of main body 2, a substantially cylindrical clamp 23 in which plug 22 is elevatably received, first elevating mechanism (not shown) for elevating mold 21 and second elevating mechanism (not shown) for elevating plug 22 and clamp 23 simultaneously or separately. Clamp 23 has an outer diameter substantially equal to or slightly smaller than the inner diameter of upper section or blank receiving section 14a of blank support 13. Clamp 23 is provided with at least one air inlet 24 through which pressurized air (of 1-8 kg/cm², for example) is injected into the interior during the forming stage. Mold 21 has vacuum ports 25 connected to a vacuum pump (not shown), which makes it possible to create a vacuum or pressure-reduced condition in a mold cavity defined by cooperation of mold 21 and clamp 23 during the forming stage.

Fig. 7 shows forming unit 20 in its inoperative state wherein mold 21 and clamp 23 are separated from each other in opposite retracted positions. Blank holder 12 mounting thereon the heated blanks 10 is conveyed by conveyor 15 to the forming station and stays for a predetermined period. At the forming station, there are arranged a plurality of forming units 20 in a similar pattern to blank holder 12, and the heated blanks 10 on blank holder 12 are positioned at the forming station just between mold 21 and clamp 23 of respective forming units 20. Soon after blank holder 12 stops at such position, the first elevating mechanisms elevates mold 21 from the retracted position (Fig. 7) to the operative position (Fig. 8) where it is inserted into the lower section 14a of blank support 13 to support a boundary area between central portion 10a and peripheral portion 10b of blank 10. In synchronism with movement of mold 21, the second elevating mechanism moves clamp 23 (together with plug 22) from the retracted position (Fig. 7) down to the operative position (Fig. 8) where peripheral portion 10b of blank 10 is clamped between the bottom of clamp 23 and the platform of blank receiving section 14b. Then, plug 22 is moved down relative to clamp 23 to obtain the operative state of forming unit 20 shown in Fig. 8. Of course, all of forming units 20 operate similarly and simultaneously with respect to blanks 10 on blank holder 12.

Since central portion 10a of blank 10 has been heated to a temperature above the melting point of the blank material or at least to a thermoformable temperature, it is easily deformable in response to downward movement of plug 22, and at last formed into a cup configuration of main body 2 along inner wall 21a of mold 21. Peripheral portion 10b of blank 10 held between the bottom of clamp 23 and blank support 13 remains as flange 3. Injection of pressurized air through air inlet 24 and/or vacuum suction through ports 25 will facilitate thermoformation of blank 10, especially when central portion 10a of blank 10 remains in a solid phase of the blank material. On the contrary, when central portion 10a has been heated to above the melting point of the blank material, either one or combination of air injection and vacuum suction may be sufficient, without use of plug 22.

After each blank 10 has been formed into container 1 at the forming station, blank holder 12 carrying the formed containers 1 is conveyed by conveyor 15 to the flange annealing station where flange 3 of the formed container 1 is annealed by flange annealing unit 26 comprising heating means 27 for heating the flange portion or peripheral portion 10b of the formed blank 10 to a predetermined temperature by direct contact with a heating board 27a and cooling means 28 for cooling the heated flange portion to a normal temperature by direct contact with a cooling board 28a. Mounts 27a, 28a may be identical, which accommodate the formed cup body 2 and support the flange portion 3 to assist operation of heating and cooling boards 27a, 28a.

After the flange annealing stage is completed, blank holder 12 is again conveyed by conveyor 15 to the pick-up station where they are removed from blank holder 12 by pick-up unit 28. Pick-up unit 28 may be of any conventional design. After all of containers 1 have been removed at the pick-up station, blank holder 12 becomes empty carrying no blank thereon. The empty blank holder 12 is conveyed to the feed station where eight blanks 10 are supplied to the respective blank holders 13 in the manner described hereinbefore. Thus, blank holder 12 is subjected to the blank feeding operation, heating operation, forming operation, flange annealing operation and blank removal operation, in this order, during one circulation of conveyor 15.

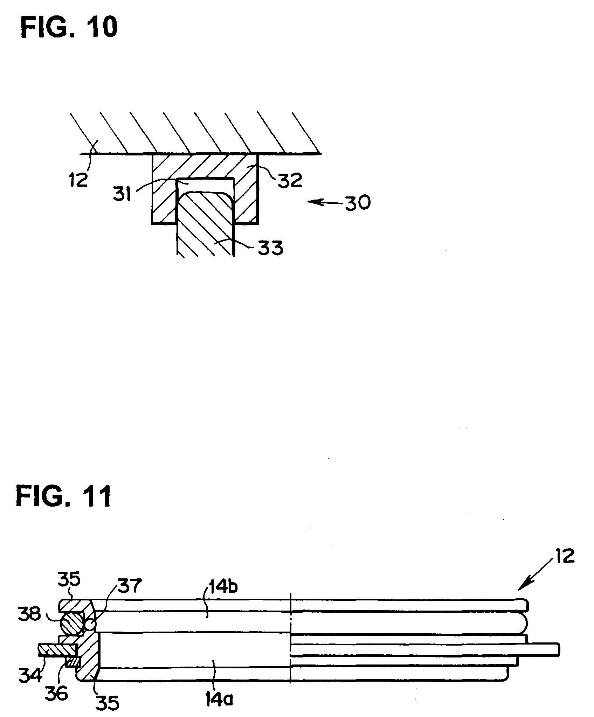

To impart predetermined shape and dimension to container 1, it is necessary to definitely position blank 10 with respect to heating unit 18 at the heating station and also with respect to forming unit 20 at the forming station. In practice, it would be difficult to control the stop positions of conveyor 15. Preferably, the thermoforming apparatus of the present invention is provided with positioning means, an example of which is shown in Fig. 10.

Fig. 10 shows positioning means 30 comprising a cylinder 32 secured to the bottom of blank holder 12 and a projection 33 engageable within a bottom opening 31 of cylinder 32. Cylinder 32 may be secured at any desired location of the bottom of blank holder 12, for example at opposite ends in width direction that is perpendicular to the direction of travel by conveyor 15. When positioning means 30 is provided at the heating station, projection 33 is moved together with lower heating boards 19b so that it enters opening 31 of cylinder 32 when lower heating boards 19b reaches its operative position shown by solid lines in Fig. 6. At the forming station, projection 33 of positioning means 30 is moved together with mold 21 of forming unit 20 so that it enters opening 31 when mold 21 reaches its operative position shown in Fig. 8. Thus, each blank 10 carried by blank support 13 is kept in definite position relative to heating unit 18 and forming unit 20 by engagement between projection 33 and opening 31.

Fig. 11 shows blank holder 120 in detail, which has a metal base plate 34 and a ring member 35 fitted within each hole (eight holes in Fig. 2) in base plate 34. Ring member 35 is inserted to the hole from above and then secured by a stopper ring 36 surrounding the lower portion of ring member 35 on the underside of base plate 34. The interior of ring member 35 provide lower section 14b and upper blank receiving section 14b with an annular platform therebetween for supporting thereon peripheral portion 10b of blank 10, as having been described in reference to Fig. 3.

The upper portion of ring member 35 is provided with a plurality of grooves at predetermined angular intervals, in which steel balls 37 are received. Balls 37 are radially movable within the respective grooves but biased inwardly by a surrounding O-ring 38 or any other suitable spring means so that the inner ends of the respective ball 37 protrudes into upper blank receiving section 14b to engage blank 10 received therein. This provides a centering mechanism that automatically positions blank 10 at a center position in blank receiving section 14b, even if blank 10 is smaller than section 14b as shown in Fig. 4. O-ring 38 allows balls 37 to move radially outwardly to allow expansion of blank 10 during the heating stage, while keeping the centering function.

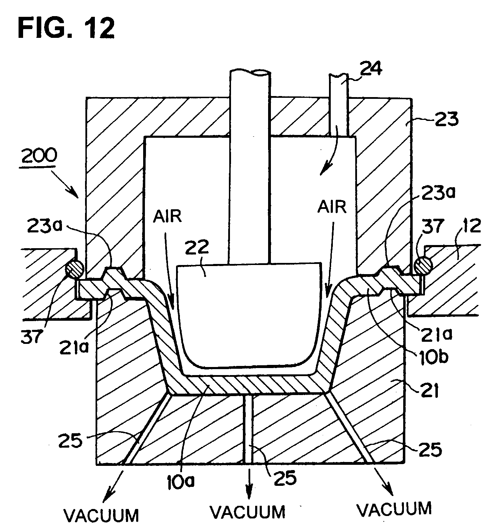

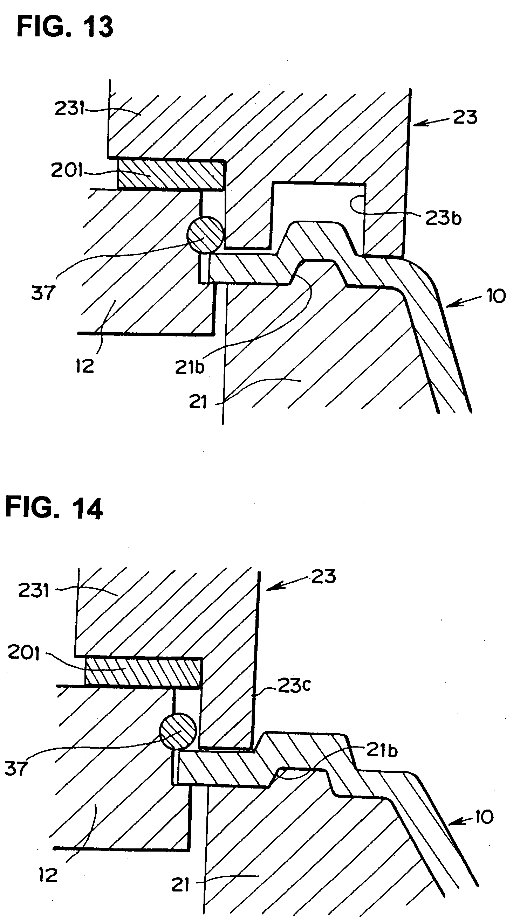

Usually, the opening of container 1 is covered with a plastic film to prevent contamination of the food contained therein. The plastic film is heat-sealed onto flange 3 of container 1. For better heat-sealing property and easier peel-off of the plastic film, flange 3 may have an undulating surface. In one embodiment, the undulating flange 3 may be formed at the same time container 1 is formed. Fig. 12 shows a forming unit 200 for use in this embodiment, in which identical numerals indicate similar parts and elements in forming unit 20 in Figs. 7 and 8. In forming unit 200, the top of mold 21 has an annular projection 21b which cooperates with an annular groove 23a on the bottom of clamp 23 to form an annular ridge at flange 3, at the same time of forming cup-shape main body 2. In this case, it is necessary that peripheral portion 10b of blank 10 has been heated by heating unit 18 to a sufficiently high temperature, preferably above the melting point of the blank material. As far as peripheral portion 10b has been sufficiently softened or melted, annular groove 23a on the bottom of clamp 23 may not have a particular contour corresponding to the ridge to be formed at flange 3, which may be replaced by such a groove 23b as shown in Fig. 13 which simply accommodates the undulating surface of flange 3. In another modified embodiment shown in Fig. 14, clamp 23 has no groove but a cylindrical wall 23c that surrounds the ridge.

There would be a probability that peripheral portion 10b of blank 10 is squashed by pressure when it is clamped between mold 21 and clamp 23, which makes it impossible for flange 3 to have a scheduled thickness. To cope with this problem, the forming units in Figs. 13 and 14 has a packing 201 fitted on the underside of an outward extension 231 of clamp 23 for resilient contact with the top surface of blank holder 12 when claim 23 moves down to the operative position, thereby providing an air-tight cavity between mold 21 and clamp 23. In such design, there may be a small interval between the bottom of clamp 23 and peripheral portion 10b of blank 10, as shown in Figs. 13 and 14.

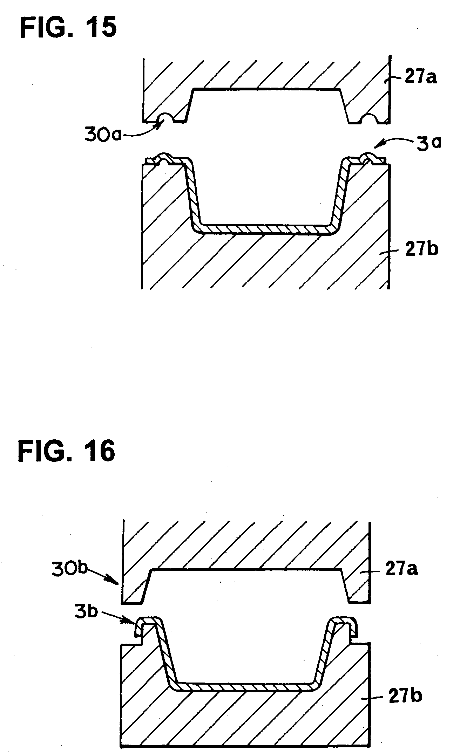

Although the flange undulation may be imparted at the forming stage as described above in reference to Figs. 12-14, it is to be recognized that If the flange portion of a relatively low temperature is subjected to the undulation forming process, a greater degree of stress or strain would remain in the flange portion. Therefore, in a more preferable embodiment, the flange undulating process is carried out at the flange annealing station. Fig. 15 shows an example in which an annular projection (not indexed) formed on the top of mount 27b (Fig. 9) which cooperates with an annular groove 30a formed on the bottom of heating board 27a to form an annular ridge 3a at the flange portion. Fig. 16 shows a modification in which a skirt flange 3b is formed when a peripheral projection 30b of heating board 27a engages with a peripheral cut-out (not indexed) of mount 27b. in these embodiments, ridge 3a or skirt flange 3b is formed while the flange portion is being heated, but may be formed relatively soon after the flange portion is heated by heater means 27, followed by cooling. The flange portion is heated by direct contact with heating board 27a of heater means 27 to a predetermined temperature, preferably above a melting point of the blank material so that the flange portion becomes easier to be formed into a desired shape as shown in Fig. 15 or Fig. 16.

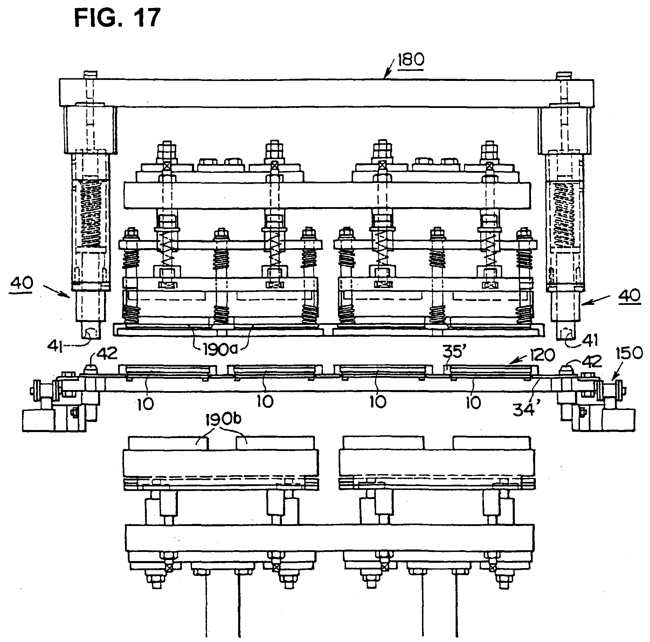

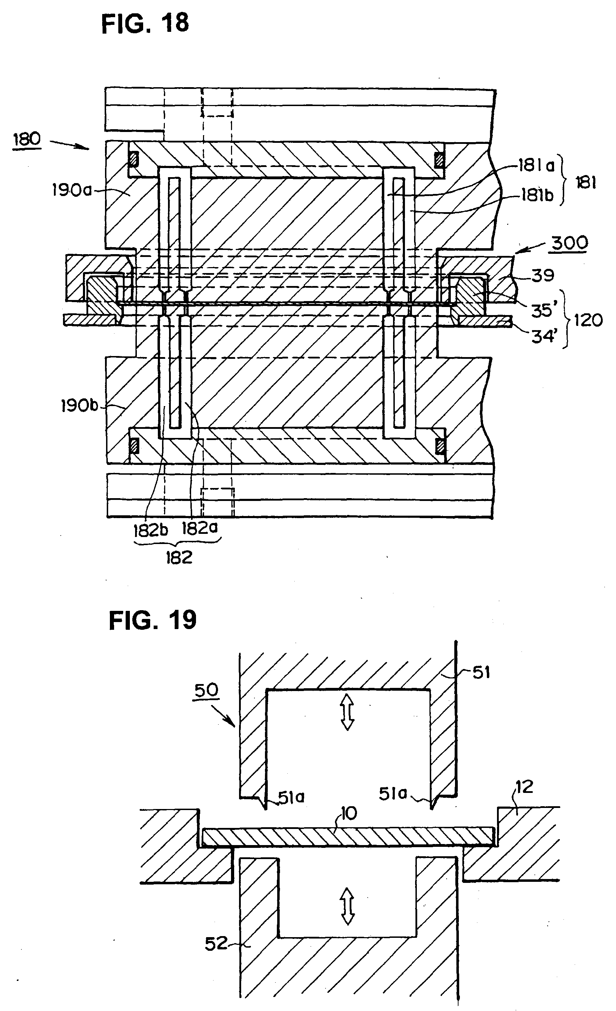

Fig. 17 shows a modified embodiment of the heating unit. Heating unit 180 in Fig. 17 comprises a plurality of pairs of opposite upper and lower heating boards 190a, 190b and an elevating mechanism (not shown) for elevating heating boards, which is similar to heating unit 18 in Fig. 6. Heating boards 190a, 190b in heating unit 180 have a plurality of air passages 181, 182 respectively, as shown in Fig. 18. Air passages 181, 182 extend through the thickness of heating boards 190a, 190b, for injecting pressurized air toward blank 10, which facilitates separation of blank 10 from the surface of boards 190a, 190b after the heating stage is completed.

Air passages 181, 182 may be of any desired configuration and arrangement. In the embodiment of Fig. 18, upper heating board 190a is provided with predetermined number of circularly arranged, spaced, inside and outside air passages 181a and 181b. These inside and outside air passages 181a and 181b are arranged on concentric circles of different diameter, both of which are, in turn, concentric with blank 10 supported in position by blank holder 120. Likewise, air passages 182 of lower heating board 190b comprise predetermined number of concentrically arranged, spaced, inside and outside air passages 182a and 182b. Inside and outside air passages 181a and 181b; 182a and 182b are connected at their base ends by bypasses, respectively, which are connected to an air pump (not shown). Air passages 181 (181a and 181b) of upper heating board 190a are opposed to air passages 182 (182a and 182b) of lower heating board 190b. A particular design of air passages 181, 182 shown in Fig. 18 is to be understood as only an example. The air passages may be provided in one of upper and lower heating boards 190a, 190b. The leading ends of air passages should preferably be narrowed to have smaller openings that contacts with the blank surface, to prevent striking air marks to appear on the surface of container 1.

Since blank holder 12 carries eight blanks 10, heating unit 180 has eight pairs of upper and lower heating boards 190a, 190b, though only four pairs arranged side by side are shown in Fig. 17. Another row including remaining four pairs is arranged behind the four pairs in Fig. 17. All pairs operate in synchronized fashion. Heating unit 180 of such construction may be installed at plural heating stations, as shown in Fig. 1.

Blank holder 120 used in the embodiment of Figs. 17 and 18 is substantially identical to blank holder 12 of Fig. 11 but include some modifications in particular design. A metallic base plate 34' including eight holes (see Fig. 2), within which ring members 35' are fitted respectively, is connected to chain conveyor 150 and conveyed thereby in a direction perpendicular to the sheets of Figs. 17 and 18. Reference numeral 40 indicates stop position correct mechanism. In the embodiment of Fig. 17, a pair of stop position correct mechanisms 40, 40 are mounted at opposite sides of blank holder 120. Each stop position correct mechanism 40 has a hydraulic cylinder 41 which extends downward for engagement with a corresponding one of projections on blank holder 120 at opposite sides thereof when blank holder 120 reaches the stop position at the heating station. This enables blank holder 120 carrying eight blanks 10 to stay at a predetermined position.

In addition to the position control of blank holder 120, it is also desirable that relative position of each blank 10 on blank holder 120 with respect to upper and lower heating boards 190a, 190b of heating unit 180. This can be done by employing positioning means 30 shown in Fig. 10. Another positioning means 300 is shown in Fig. 18 which includes a bottom-grooved ring frame 39 surrounding upper heating board 190a. Frame 39 elevates integrally with upper heating board 190a. When upper heating board 190a is moved from the upper retracted position (Fig. 17) to reach the lower operative position (Fig. 18), the bottom groove of frame 39 receives the upper portion of ring member 35', whereby blank holder 120 carrying blanks 10 thereon is in a locked condition at a predetermined position relative to heating unit 180.

Blank 10 to be used in the present invention may be of a single-layered or multi-layered thermoplastic sheet. When a container is produced by using a multi-layered blank sheet, it is sometimes desired that blank 10 has a circular half-notch at the surface portion thereof to improve easy-peel property of the sealed lid. A half-notch is formed from the top surface of blank 10 to depth which depends upon thickness and material of one or several of upper layers of the multi-layered blank. The half-notch separates the upper notched layer(s) and the lower unnotched layer(s) so that the former will be accompanied by the sealed lid and easy to be peeled off from the latter. When the multi-layered blank has one or more layer of gas-barrier or oxygen-impermeable material such as EVOH, PVC and PVDC, such layer should not be severed by the half-notch. The half-notch is formed on a planar surface area of peripheral portion 10b of blank 10 or flange 3 of container 1, most preferably just outside of the bent-down portion of container 1.

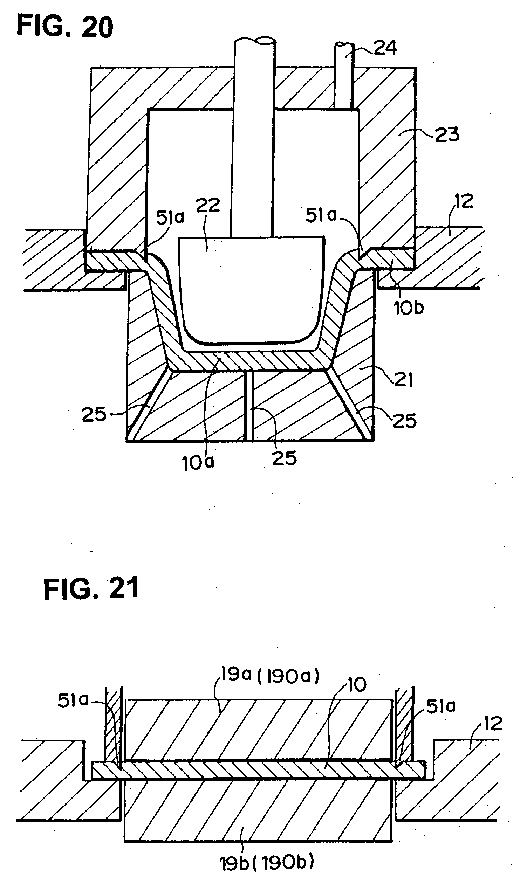

Means for forming a half-notch may be mounted at any desired location, for example, between the blank feed station and the heating station, between the heating station and the forming station, or immediately after the forming station. Fig. 19 shows an example of the half-notch forming means 50 which comprises a pair of elevatable members 51, 52 mounted at opposite sides of the path of travel of blank holder 12. The bottom of the upper member 51 has a circular knife 51a that descends toward blank 10 in synchronism with ascent of the lower member 52 to form a half-notch to a predetermined depth. The notch formation is of course carried out during stay of blank holder 12 which restarts after completion of the notch formation toward the next stage. In another embodiment, circular knife 51a is formed integrally with clamp 23 of forming unit 20, as shown in Fig. 20, in which case the half-notch formation is achieved during thermoformation of the container. In still another embodiment, circular knife 51a is mounted as shown in Fig. 21, which surrounds upper heating board 19a (190a) of heating unit 18 (180). In this embodiment, circular knife 51a elevates together with upper heating board 19a (190a) so that the half-notch formation is achieved during the heating stage. Circular knife 51a may be formed integral with upper heating board 19a (190a) of a larger diameter than that shown in Fig. 21. When plural heating units 18a-18c are provided as in an embodiment of Fig. 1, at least one heating unit is provided with circular knife 51a surrounding or integral with its upper heating board. Knife should preferably be controlled to have a predetermined temperature, which facilitates the half-notch to be formed to a predetermined depth from the top surface of blank 10.

### 〈Test Samples〉

A plurality of 140mm diameter blanks were cut out from a 0.8mm thick multi-layered plastic sheet of PP/AD/EVOH/AD/PP. Each blank was heated by upper and lower heating boards at three heating stations. The board temperature was controlled to be 165 °C at the first station, 165 °C at the second station and 180 °C at the last station so that the central portion in direct contact with the heating board was at last heated to a melt phase temperature. Then, the heated blank was formed by a plug-assisted forming unit with air injection (at 6kg/cm²) into a cup-like container suitable for use as a package of one meal of cooked rice (200g as a raw material). The container was then subjected sterilization by intermittent flush of steam of 140 °C for 6 seconds, which was repeated eight times. After sterilization, the flange portion was deformed, which greatly degrades the commercial value of the container. Similar flange deformation was observed when the blank was retort-sterilized at 120 °C for 30 minutes.

On the contrary, the container produced in the same manner as above-described was subjected to the flange annealing process and then to the steam flush sterilization in the same condition to observe flange deformation. The flange annealing process was carried out in different conditions varying temperature of the heating board 27a (Fig. 9) in a range of 150-260 °C and also varying the contact period with the heating board in a range of 1-8 seconds. The heated flange was then cooled by the cooling board 28a (Fig. 9) of 25 °C for the same period with the contact period with the heating board. The results are shown below in Table I.

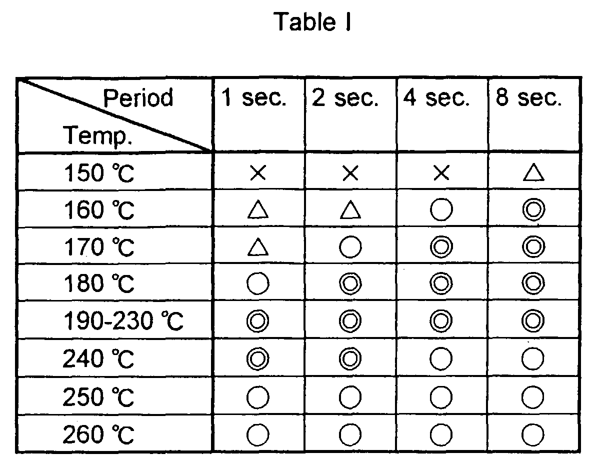

Further, the flange deformation was observed with respect to the container which was prepared in the same manner as in the above test samples except that the sterilization was carried out in a retort oven of 120 °C for 30 minutes, the results of which are shown below in Table II.

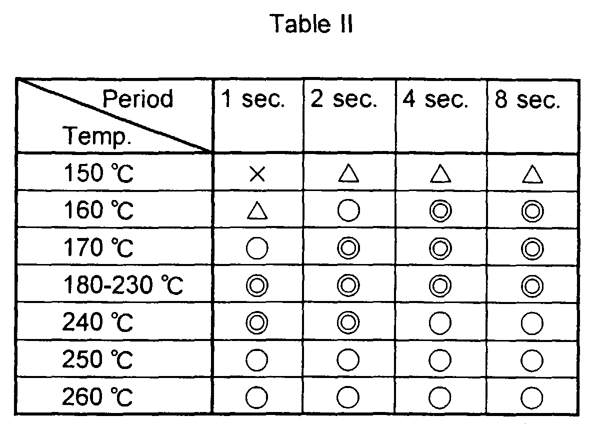

In Tables I and II, ⓞ indicates that no wavy deformation was observed at the flange portion, ○ little deformation, △ no remarkable deformation and X fatal deformation. The results in Table I and II show that, irrespective of the heating period, the wavy deformation of the flange portion can be prevented or at least minimized to a permissible level by annealing the flange portion to a temperature of 160-260 °C. The similar tests were conducted by changing blank sheet thickness to 0.6mm and 1.0mm and also by changing the cooling temperature by the cooling board 28a to 5 °C and 40 °C, but the results obtained were substantially equal to those shown in Tables I and II. This proves that prevention of the flange deformation will not so much influenced by the blank sheet thickness and the cooling temperature and depend to a greater extent upon the heating temperature in the flange annealing process.

In the above tests, the central area 10a of the blank 10 was heated by direct contact with the heating boards 19a, 19b (Fig. 6) of the heating unit 18. Another test was conducted by changing such a direct heating system to an indirect heating system in which the central area 10a of the blank 10 was heated to a melt phase by a pair of upper and lower infrared heaters, while remaining the peripheral portion 10b in a solid phase. This sample was formed into the package, and then sterilized by steam flush and by retort process, in the same manner as in the preceding tests. The results obtained are substantially the same as indicated by Tables I and II. Accordingly, the flange annealing process is proved to be effective to minimize the wavy deformation of the flange portion, irrespective of whether the blank heating system is "direct" or "indirect".

Although the present invention has been described and illustrated in conjunction with specific embodiments thereof, it is to be understood that the present invention is not limited to these embodiments and involves various changes and modifications within the spirit and scope of the invention.

## Claims

1. A thermoforming process for manufacturing a plastic container (1) having a cup-shaped main body (2) with a radially extending flange (3) from an upper edge thereof, comprising the following steps:
- preparing a thermoplastic blank (10) of a predetermined configuration;
- subjecting a central portion (10a) of the blank (10) to direct contact with a pair of opposed heating boards (19a, 19b) so that the central portion (10a) is heated to a predetermined temperature, wherein a peripheral portion (10b) of the blank (10) is kept out of contact with the heating boards (19a, 19b); and
- forming the heated central portion (10a) of the blank (10) into a predetermined cup shape of the main body (2) of the container (1).

2. A thermoforming process for manufacturing a plastic container (1) having a cup-shaped main body (2) with a radially extending flange (3) from an upper edge thereof, comprising the following steps:
- preparing a thermoplastic blank (10) of a predetermined configuration;
- heating a central portion (10a) of the blank (10) to a predetermined temperature;
- forming the heated central portion (10a) of the blank (10) into a predetermined cup shape of the main body (2) of the container (1); and
- heating the flange (3) of the container (1) to remove a forming stress remaining in the flange (3).

3. The process according to claim 2,
wherein the flange (3) of the container (1) is heated to a temperature above the melting point of the material of the thermoplastic blank (10).

4. The process according to claim 2 or 3,
wherein the step of heating the flange (3) is followed by cooling.

5. An apparatus for thermoforming a thermoplastic blank (10) into a plastic container (1) having a cup-shaped main body (2) with a radially extending flange (3) from an upper edge thereof, comprising:
- a blank holder (12) for supporting the blank;
- a conveyor (15) that conveys the blank holder (12) along a predetermined path of travel in a predetermined direction;
- a blank feeder (16) that feeds the blank (10) to the blank holder (12) at a first predetermined location along the path of travel of the blank holder (12);
- a heating unit (18), located at a second predetermined location downstream of the first predetermined location in the direction of travel of the blank holder (12) along the path of travel thereof, having at least one pair of opposed heating boards (19a, 19b) for direct contact with opposite surfaces of the blank (10) at a central portion (10a) thereof; and
- a forming unit (20), located at a third predetermined location downstream of the second predetermined location in the direction of travel of the blank holder (12) along the path of travel thereof, for forming the heated central area (10a) of the blank (10) into a predetermined cup shape of the main body (2) of the container (1).

6. The apparatus according to claim 5,
wherein the blank holder (120) comprises:
- a base plate (34) with a plurality of openings,
- a plurality of rings (35) each fitted within the opening and provided with an inside platform on which a peripheral portion (10b) of the blank (10) is supported,
- pusher members (37) radially movable with respect to the ring (35), and
- spring means (38) that force the pusher members (37) to protrude toward the inside platform for engagement with a peripheral edge of the blank (10) supported thereon.

7. The apparatus according to claim 5 or 6,
which further comprises first positioning means (30) for positioning the blank holder (12) to a first predetermined position with respect to the heating unit (18) and second positioning means for positioning the blank holder (12) to a second predetermined position with respect to the forming unit (20).

8. The apparatus according to claim 7,
wherein the first positioning means (30) comprise a first cylinder (32) secured to the blank holder (12) and a first centering plug (33) secured to the heating unit (18) for engagement within the first cylinder (32) when the blank holder (12) is in the second predetermined location.

9. The apparatus according to claim 7 or 8,
wherein the second positioning means (30) comprises a second cylinder secured to the blank holder (12) and a second centering plug secured to the forming unit (20) for engagement within the second cylinder when the blank holder (12) is in the third predetermined location.

10. The apparatus according to any of claims 5 to 9,
wherein the conveyor (15) is intermittently driven to make brief stops for a predetermined period at the first, second and third predetermined locations, respectively.

11. The apparatus according to any of claims 5 to 10,
wherein the heating unit (18) comprises a pair of the heating boards (19a, 19b) at opposite sides of the path of travel of the blank holder (12), and drive means for moving the heating boards (19a, 19b) toward one another to press therebetween the central area (10a) of the blank (10) supported by the blank holder (12) staying at the second predetermined location.

12. The apparatus according to any of claims 5 to 11,
wherein one of the heating boards (19a, 19b) in the heating unit (18) contacts only with the central portion (10a) of the blank (10) at one surface thereof whereas the other heating board is somewhat larger to allow contact with the central portion (10a) and its surrounding portion of the blank (10) at the other surface.

13. The apparatus according to any of claims 5 to 12,
wherein at least one (190a) of the heating boards (190a, 190b) is provided with one or more of holes (181a, 181b) through which air is injected onto the blank surface to facilitate the blank (10) to separate from the heating board (190a).

14. The apparatus according to any of claims 5 to 13,
wherein a plurality of heating units (18a, 18b, 18c) are installed along the path of travel of the blank holder (12) at predetermined intervals, whereby the blank (10) is heated to successively increased temperatures during travel through the heating units (18a, 18b, 18c).

15. The apparatus according to any of claims 5 to 14,
wherein the forming unit (20) comprises:
- a cast mold (21) movably mounted at one side of the path of travel of the blank holder (12),
- a substantially cylindrical clamp (23) movably mounted at the opposite side of the path of travel of the blank holder (12),
- drive means for moving the cast mold (21) and the clamp (23) toward one another to define an air-tight chamber therebetween, and
- press means (22, 24, 25) for forcing the blank (10) into the air-tight chamber to be in contact under pressure with an inner wall (21a) of the cast mold (21).

16. The apparatus according to claim 15,
wherein the press means (22) comprise a plug (22) mounted reciprocatably in the clamp (23).

17. The apparatus according to claim 15 or 16,
wherein the press means (22) comprise air injecting means (24) for injecting pressurized air into the air-tight chamber toward the blank (10) and/or vacuum means (25) for creating a vacuum or pressure-reduced condition in the air-tight chamber.

18. The apparatus according to any of claims 5 to 17,
wherein the forming unit (20) further includes a packing member (201) mounted on a bottom of the clamp (23) to be elastically engageable with an upper surface of the blank holder (12) when an air-tight chamber is defined between the cast mold (21) and the clamp (23).

19. The apparatus according to any of claims 5 to 18,
wherein the forming unit (20) further includes undulating means (21a, 21b, 23a, 23b, 30a, 30b) for forming the peripheral portion of the blank (10) into an undulating flange with an upward projection.

20. The apparatus according to any of claims 5 to 19,
which further comprises notch forming means (50, 51, 52) for forming an annular notch of a predetermined depth from the top surface of the blank (10) at a boundary area between the central portion (10a) to be formed into the cup-shaped main body (2) of the container (1) and the peripheral area (10b) to be formed as the flange (3).

21. The apparatus according to claim 20,
wherein the notch forming means (50, 51, 52) are mounted between the blank feeder (16) and the heating unit (18), or between the heating unit (18) and the forming unit (20), or at a location downstream of the forming unit (20) along the path of travel of the blank holder (12).

22. The apparatus according to claim 20 or 21,
wherein the notch forming means (50, 51, 52) comprise an annular knife (51a) surrounding the upper heating board (19a) in the heating unit (18) and movable in synchronism with the upper heating board (19a).

23. The apparatus according to claim 22,
wherein the annular knife (51a) is secured to or formed integral with the upper heating board (19a, 190a).

24. The apparatus according to claim 22,
wherein the annular knife (51a) is secured to or formed integral with the bottom of the clamp (23) in the forming unit (20).

25. The apparatus according to any of claims 22 to 24,
wherein temperature control means are provided to control the temperature of the annular knife (51a).

26. The apparatus according to any of claims 5 to 25,
which further comprises a second heating unit (27), located at a fourth predetermined location downstream of the third predetermined location in the direction of travel of the blank holder (12) along the path of travel thereof, for heating the flange portion (10b) of the formed container (1) to remove a forming stress remaining in the flange portion (10b).

27. The apparatus according to claim 26,
which further comprises a cooling unit (28), located downstream of the fourth predetermined location, for cooling the heated flange portion (10b).

28. The apparatus according to any of claims 5 to 27,
which further comprises undulating means (21a, 21b, 23a, 23b, 30a, 30b) for forming the peripheral portion of the blank (10) into an undulating flange with an upward projection.

29. The apparatus according to claim 28,
wherein the undulating means (21a, 21b, 23a, 23b, 30a, 30b) are mounted in the second heating unit (27) or separately located downstream of the heating unit (18).
